# EUROPEAN PATENT SPECIFICATION

(11) **EP 1 022 217 B1**
(45) Date of publication and mention of the grant of the patent: **22.09.2004**
(21) Application number: 99403197.9
(22) Date of filing: 17.12.1999
(51) Int. Cl.: B63H 13/00, B63H 23/24

(54) **Wind-driven vessel**
Windangetriebenes Schiff
Bateau propulsé par le vent

(30) Priority: 22.01.1999 JP 1433499
(43) Date of publication of application: 26.07.2000
(73) Proprietor: Imura, Kaku, Wakayama-ken 640-8302 (JP)
(72) Inventor: Imura, Kaku, Wakayama-ken 640-8302 (JP)
(74) Representative: Lemoine, Robert

(56) References cited:
- GB-A- 1 333 157
- US-A- 4 353 702
- US-A- 4 371 346
- US-A- 4 785 404
- PATENT ABSTRACTS OF JAPAN vol. 1998, no. 13, 30 November 1998 (1998-11-30) & JP 10 226395 A (NISSAN MOTOR CO LTD), 25 August 1998 (1998-08-25) & US 6 032 087 A (NISSAN MOTOR CO.) 29 February 2000 (2000-02-29)

## Description

### Field of the invention

This invention relates to a wind-driven vessel which cruises by wind force energy, and more particularly to a wind-driven vessel driven by a windmill which normally rotates in even with respect to natural wind direction.

### Description of the prior art

Vessels utilizing wind energy which drives them have been known, such as sailing vessels, yachts and windmill vessels. Although the sailing vessels are simple in their constructional structures, they have no thrust against the wind direction and are unable to sail against the wind direction. On the contrary, yachts which cruise by lifting force at sails are able to cruise even by given angle against-wind, but they are difficult to steer.

On the other hand, as the windmill vessels are driven by the wind energy converted to rotational energy by a horizontal axis windmill or vertical axis windmill, said energy being transferred to a screw in the water, they are able to cruise against the wind.

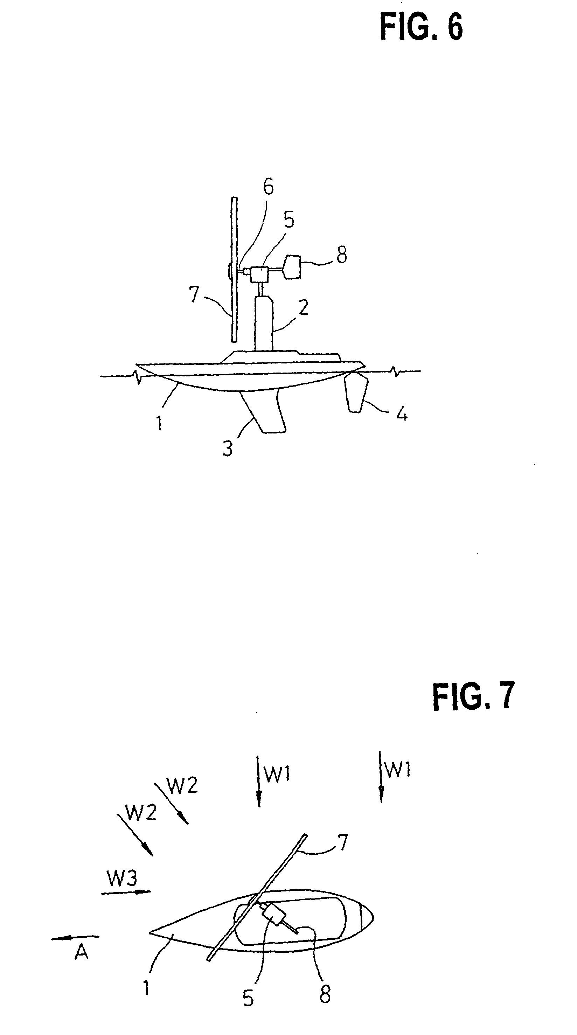

Such a windmill vessel is shown in Fig.6 and Fig.7, in which numeral 1 is a vessel body, 2 is a mast, 3 is a center board, 4 is a steer, 5 is a link mechanism, 6 is a rotational shaft, 7 is a propeller type windmill, and 8 is a window check stabilizing plate by the latest of which a rotor (rotational plane) of a propeller type windmill is always kept in a wind direction and a rotation of the windmill is transferred to the screw (not shown) to cruise the vessel.

However, said windmill vessel is unable to efficiently utilize the energy of the natural wind. For example, when the windmill vessel 1 cruises in a direction shown by arrow A with side winds W1, W1 as shown in Fig. 7, the vessel body receives the natural wind W1, W1 from the side when starting but receives the wind W2, W2 from slant forward as the vessel cruises. This reason is caused by an outlook wind (self cruise wind) W3, which is received by the vessel. As a result, the vessel receives the slant front winds W2, W2 caused by the mutual effect of the side natural wind W1 and the outlook wind (self cruise wind) W3 from the front. Accordingly, the rotor of the windmill 7 rotates in the direction of the slant front winds W2, W2 as an effect of window check stabilizing plate 8.

In other words, the vessel converts the energy of the slant front winds W2, W2 to a rotational energy to enable cruising. Hence, only the residual energy of W2 is utilized (i.e. the reduction in the natural wind W1 energy due to the effect of the outlook wind (self cruise wind) W3).

An additional drawback of such prior art windmill vessels is that when the windmill vessel receives the natural wind from the front of or from behind the vessel, it is unable to cruise at a speed higher than the wind velocity.

GB - A - 1 333 157 discloses a wind-driven vessel cruisable either by wind force, or by wind force and electric power, or by electric power, and comprising a windmill mechanism with a variable pitch propeller, a generator rotatably driven by said windmill mechanism, a storage battery for storing current generated by said generator, an electric motor energizable by said storage battery, a screw rotatably driven by at least one of said windmill mechanism and said electric motor, a pitch control device for controlling the propeller pitch, and a rotational plane control device for controlling the direction of the rotational plane of the propeller.

This wind-driven vessel is advantageous in that it may store electricity in the battery when it is running before a wind and may draw current from the battery to drive the water screw when it is running into wind or it is becalmed.

However, it does not use the energy of the wind in an optimum manner.

US - A - 4 353 702 discloses a sailboat comprising a windmill - like mainsail mounted on a shaft extending obliquely and rotatably connected through a flexible drive shaft to a transmission for driving a propeller.

This sailboat comprises no battery for storing current generated by a generator rotatably driven by the windmill-like mainsail.

US - A - 4 785 404 discloses an onboard computer system for indicating to the crew of a sailing vessel the best course and sail setting to implement when beating under various winds. This system has been conceived for a conventional wind-driven vessel and not for a vessel cruisable either by wind force, or by wind force and electric power, or by electric power.

### Summary of the invention.

The present invention relates to a wind-driven vessel of the type disclosed in GB - A - 1 333 157, which is able to cruise in optimum conditions, irrespective of the direction and velocity of the wind, as well as of the weather and sea conditions.

For this purpose, the wind-driven vessel according to the present invention is characterized in that:
A/ it comprises :
   a) measuring and processing means for determining the natural wind direction with respect to the vessel, comprising
      - means for measuring the cruising direction and speed of the vessel;
      - means for measuring the synthetic wind from a synthesis of the natural wind and outlook wind generated as the vessel cruises ;
      - means for measuring the ebb and flow direction and speed ; and
      - control means for operating the direction of the natural wind from the values retrieved by the measuring means ;
   b) a steer angle control device for adjusting the steer angle in response to the direction and velocity of the synthetic wind, said steer angle control device comprising a steer driving means controlled by the control means based on the measured values of the synthetic wind and ebb and flow; and
   c) a cruising control device for controlling revolution of the propeller, generator and motor revolution in response to each datum of the current position and set target position data, current direction and velocity of the natural wind, direction and velocity of the ebb and flow, so as to set thrust force of the vessel as either one of the wind force, wind force and electric power, and electric power, and to set a cruising course toward the target point in real time ;
B/ the windmill mechanism A comprises a horizontal shaft supported by a vertical support and a vertical shaft rotatably connected to the horizontal shaft, the variable pitch propeller 11 being fixed on the horizontal shaft and the vertical shaft being rotatably connected to the screw and generator; and
C/ the rotational plane control device comprises a rotary device provided on the vertical support and rotatable by the electric motor, said rotational plane control device being kept in a position so as to receive the natural wind at its front through the control means which controls the electric motor based on the data from the measuring and processing means.

Thanks to these features, an influence of the outlook wind (self cruise wind) by the cruising is evaded, the rotor of the windmill is always kept in the direction of the natural wind, and excess surplus of the energy achieved from the wind is stored as an electric energy which is utilized as a rotational energy.

Another feature of the present invention is disclosed in sub-claim 2.

### Brief Description of the Accompanying Drawings

Fig. 1 is a block diagram showing major structure of the wind-driven vessel.
Fig. 2 is a side view of the wind-driven vessel F having the major structure shown in Fig. 1.
Fig.3 is an enlarged scale view of the major part of the windmill mechanism A.
Fig.4 is a partial view of the structure of the windmill mechanism A, showing a direction control device C, a screw 25, a generator 26 and a motor 19.
Fig. 5 shows an instance of cruising by a vessel shown in Fig. 2.
Fig.6 and 7 show a wind-driven vessel according to the prior art.

### Preferred Embodiment of the Invention

Now, the preferred embodiment of this invention will be hereinafter discussed with reference to the accompanying drawings.

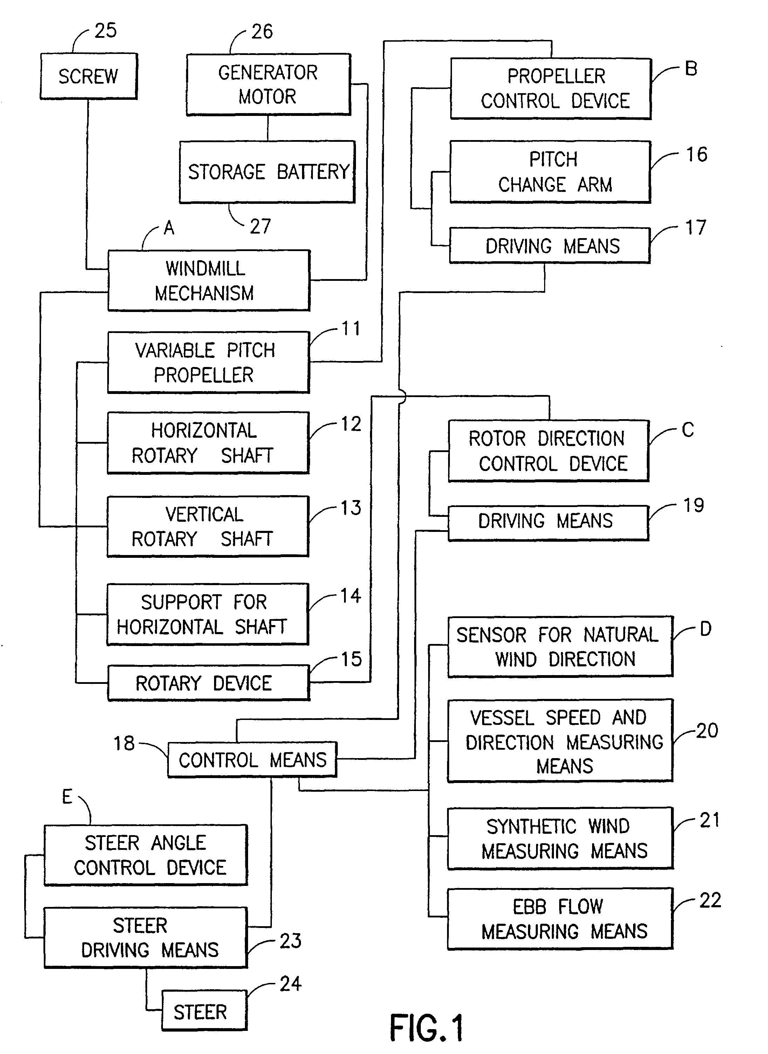

Fig. 1 is a block diagram showing a major structure of the wind-driven vessel of this invention.

The windmill mechanism A has a horizontal rotational shaft 12, with a variable pitch propeller 11, a vertical rotational shaft 13 rotating with said horizontal rotational shaft 12, a support 14 for said horizontal rotational shaft 12 and a rotatable device 15 for rotating said support 14 in a horizontal direction.

A propeller pitch control device B has a pitch change arm 16 linked to said variable pitch propeller 11, driving means 17 and control means 18.

A rotor (rotational plane of propeller) direction control device C has an electric motor 19 engaged with the rotational device 15 for rotating said support 14, function of said electric motor 19 being controlled by control means 18. Measuring and processing means D are provided on the vessel and comprise means 20 for measuring vessel speed/direction, means 21 for measuring synthetic wind (synthesis of the natural wind and outlook wind generated as the vessel cruises), means 22 for measuring ebb and flow direction and speed of the flow, control means 18 operating direction of the natural wind with respect to the vessel based on the measured value of each means.

A steer angle control device E has a steer driving means 23, control means 18 controlling the function of said steer driving means 23 in response to the speed of the natural wind and the synthetic wind, the ebb and flow direction and velocity.

Based on said structure, basic function of the windmill vessel according to this embodiment will be hereinafter discussed.

At start of the cruise, a directional data of the natural wind according to measuring and processing means D is fed to the rotor (propeller rotational plane) direction control device C, which actuates the rotational device 15 of the windmill mechanism A based on said directional data to rotate the variable pitch propeller 11 rotor (rotational plane) to a position to receive the natural wind at its front, and thereby to keep this position.

The variable pitch propeller 11 begins to rotate with receipt of the natural wind, and this rotation is transmitted to the screw 25 through the horizontal rotational shaft 12 and vertical rotational shaft 13 so as to start a cruise of the wind-driven vessel. During the cruise of the vessel, measuring and processing means D and rotor direction control device C always function so as to rotate the rotational plane of the variable pitch propeller 11 to a position so as to receive the natural wind at its front and thereby to keep the position.

Steer angle control device E always adjusts the angle of the steer 24 based on the measured data such as the synthetic wind velocity, the ebb and flow direction wind velocity and the vessel speed, so as not to be out of the given direction of the vessel by an influence of the synthetic wind.

The propeller pitch control device B varies rotational speed and rotational force as well as the pitch of the propeller 11 so as to adjust them.

Although the rotational energy of the windmill is mainly used for the rotation of the screw 25 to cruise the vessel, one part thereof is used for the generator 26 and motor 19 having functions of the generator and the motor, electric power generated thereby being charged in a storage battery 27.

The contol means 18 arbitrarily processes each datum of a target position datum, direction and speed of the current natural wind, ebb and flow direction and velocity, so as to control the functions of the windmill, generator and motor so as to set the thrust force of the vessel either at the wind force, electric power, or wind force and electric power, thereby setting the cruise course toward the objective place at real time so as to function the control means 18 as a cruise control device.

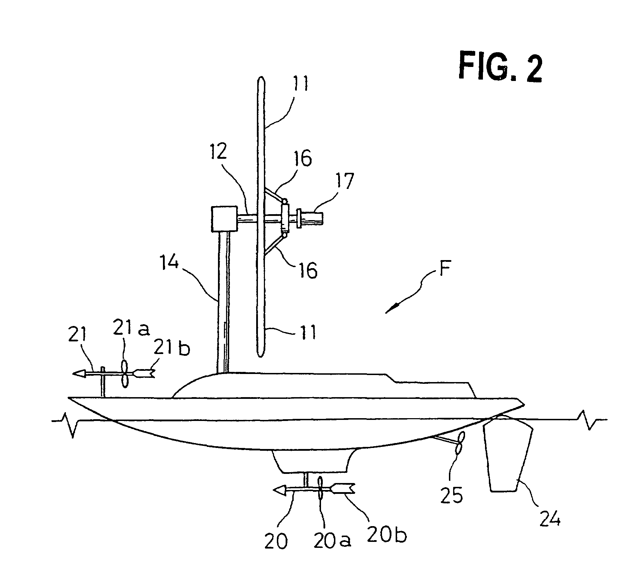

The preferred embodiment of this invention will be further discussed with reference to Fig. 2.

Fig. 2 is a side view of the wind-driven vessel F having the major structure shown in Fig. 1.

Numeral 11 is a pair of variable pitch propellers in opposite relation, which are fixed onto the horizontal rotational shaft 12. 14 is a support of said horizontal rotational shaft 12, which is able to rotate in all directions, and has a rotating device 15 at its lower end, as discussed later on.

16 and 17 are a pitch change arm and a servo motor as its driving means. Means 20 for measuring the vessel speed and direction is a part of measuring and processing means D and has a rotary member 20a and a stabilizing plate 20b.

Means 21 for measuring the synthetic wind is another part of measuring and processing means D and has a rotary member 21a and a wind check stabilizing plate 21b. To this end, as an ebb and flow measuring means, the vessel has a whole earth measuring device (GPS) to operate deviation of another point expected by the vessel speed and cruising direction from a given point and a point actually reached, so as to measure velocity and direction of the ebb and flow.

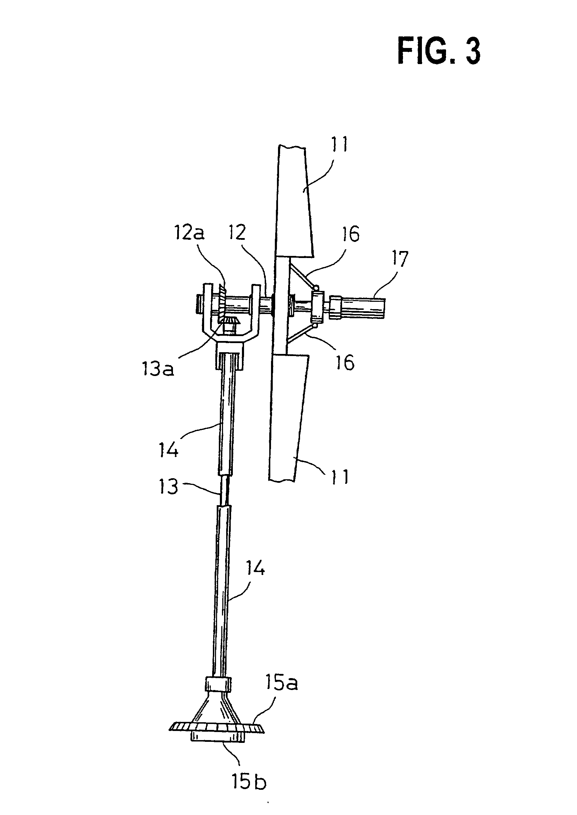

Fig. 3 is an enlarged scale view of the major portion of the windmill mechanism A wherein one end of the horizontal rotational shaft 12 and the upper end of the vertical rotational shaft 13 are meshed with worm gears 12a and 13a provided on each shaft, so that mutual rotations are transmitted. The support 14 of the horizontal rotational shaft is in a pipe shape through which the vertical rotational shaft 13 is passed, its lower end being provided with the rotary device 15 which has a worm gear 15a and the receipt member 15b thereof, whereby a rotation of the worm gear 15a causes the support 14 to rotate. As a result, the rotor (rotary plane) of the variable pitch propellers 11 and 11 is able to be oriented in a required direction.

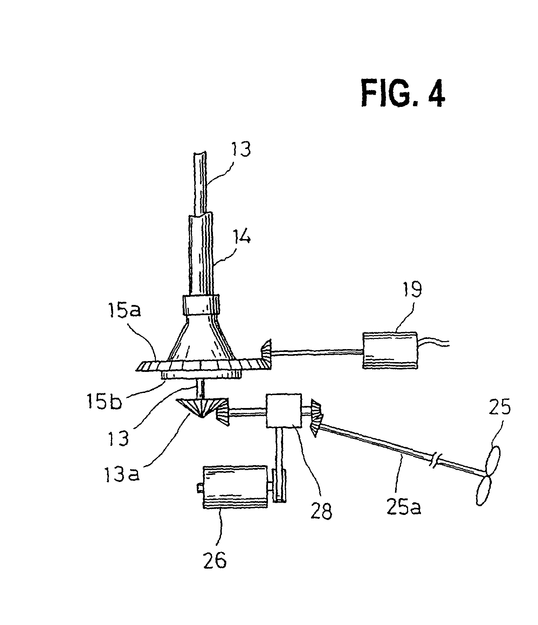

Fig. 4 is a partial view of the structure of the windmill mechanism A, showing a rotor direction control device C, a screw 25, a generator 26 and an electric motor 19. The lower end of the vertical rotational shaft 13 and a rotating shaft of a clutch device 28 are meshed through a worm gear and the variable pitch propeller 11 transmitts its rotation to a screw rotating shaft 25a through the clutch device 28 thereby rotating the screw. On the other hand, at the lower end of support 14 is the rotary device 15 which has worm gear 15a and its receiving member 15b. A rotary shaft of the electric motor 19 as a driving means constituting the rotor direction control device C meshes with said worm gear 15a through a worm gear, and a control signal from control means 18 in response to a measured data from said measuring and processing means D actuates the electric motor 19 to rotate the rotor (propeller rotary plane) of the windmill mechanism A in a natural wind direction and always keep its position.

Another rotary shaft of the clutch device 28 and the rotary shaft of the generator 26 are linked by a rotary belt and the power generated by the latter is charged in the storage battery, which causes the electric motor to rotate and to rotate the screw 25 through the clutch device 28.

Although the steer angle control device E mentioned in Fig. 1, is not shown in Fig. 2, means 23 for driving the steer control device E comprises a servo motor controlled by the control means 18 in its operation.

Cruising examples of the wind-driven vessel relating said embodiment will be hereinafter discussed.

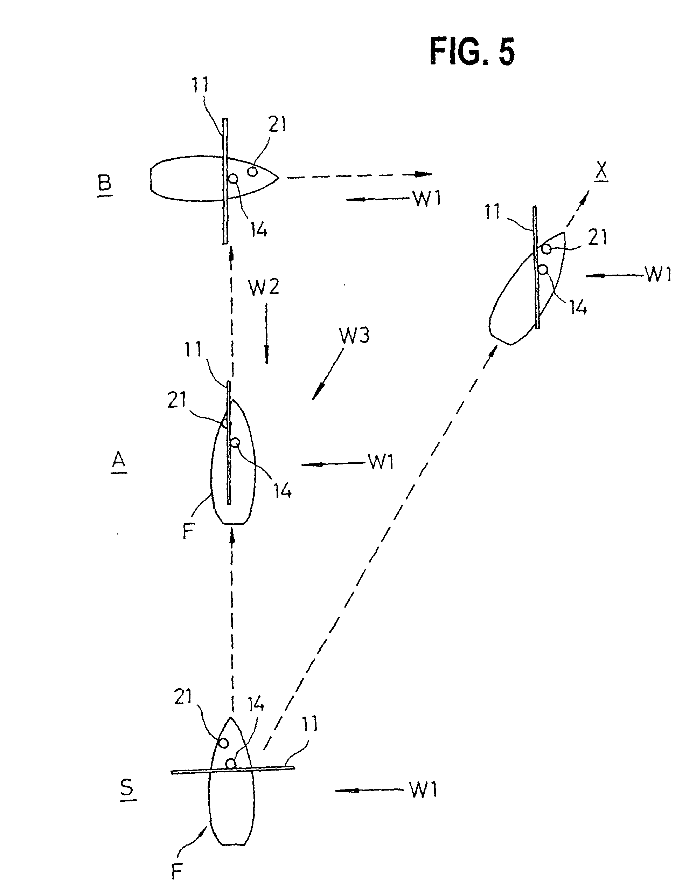

Fig. 5 is a view showing cruising example from stoppage position S to an objective point X. There may be two courses toward the goal X, S-A-B and S-X.

First, at S point, measuring and processing means D operates the data measured at the synthetic wind measuring means 21, and at the vessel speed direction measuring means 20 by an aid of the control means 18 so as to sense sideward natural wind W1 toward the vessel F. Then, a control signal based on the natural wind direction data is fed to the servo motor 19 as a means for driving the rotor direction control device C. A given angle rotation based on the control signal of the electric motor 19 causes the support 14 of the horizontal rotary shaft 12 to rotate to keep the rotor of the windmill, i.e. rotary plane of the propeller 11 in opposite to the direction of the natural wind W1, at its position.

If the natural wind W1 is 8 meters per second, an operation of the clutch device 28 causes the rotary shaft of the screw 25 and driving system of the windmill mechanism A to link thereof so as to start the vessel F and cruises in straight course via A point to B point. During said cruise, measuring and processing means D operates to continuously sense the direction of the natural wind, data of which causes the rotor direction control device D to opposite the rotor direction control device C to opposite the windmill rotor against the natural wind. In other words, data measured by measuring means 20, synthetic wind measuring means 21, and ebb and flow measuring means 22 are operated by the control means 18, which feeds a directional data of the natural wind to the rotor direction control device C at real time. In this embodiment, direction of the natural wind is operated by the rotation number of the rotary member 20a of the vessel speed and direction measuring means 20 and the rotation number of the rotary member 21a of the vessel direction and synthetic wind measuring means 21, direction of the synthetic wind and ebb flow direction and velocity by the ebb and flow measuring means 22.

During a duration from S staff point via A point to B point, the vessel receives the natural wind W1 from its sideward and cruises of N per second. For this reason, the vessel F receives outlook wind (natural wind) at N per second from the forward cruising direction. For this reason, the vessel F actually receives synthetic wind W3 of the natural wind W1 and self run wind W2, thereby the rotary plane of the propeller 11 receives the synthetic wind W3 thereby causing the vessel F to rotate W3 direction in its cruising run direction. Hence, straight cruise becomes difficult.

In this case, although there is a need to keep the cruising path of the vessel F by adjusting steer angle, the steer angle control device E adjusts the steer angle in this embodiment. In other words, the synthetic wind speed and direction data by the synthetic wind measuring means 21 of measuring and processing means D for said natural wind causes the servo motor 23 as steer driving means for the steering angle control device E to control the servo's function so as to provide necessary steer angle at the steer 24, so that straight cruise between S-A-B is kept.

When the vessel F arrives at the B point to orient the vessel toward the X point, function of the rotor direction control device C causes the rotary plane of the propeller 11 to rotate to keep the vessel at position opposite to the natural wind W1.

Between the B point and X point, the direction of the natural wind W1 and cruising direction of the vessel F become completely opposite.

Although the vessel F cruises against the wind, but balances at the cruising speed of half of the natural wind speed. Then, if the energy achieved through the windmill for the natural wind W1, by dropping the vessel speed, is utilized in branching the screw rotation and generator rotation, thereby providing better energy efficiency.

To this end, the propeller pitch control device B caused propeller 11 pitch to change during the cruise, to adjust the rotation number and rotation force. In Fig. 5, although a case wherein the vessel F cruises in a course of S-A-B-X, it is also advisable to straightly cruise from the S point to X point, taking the natural wind velocity and ebb and flow condition, into consideration.

Course setting of various conditions, may be conducted manually, but it is advisable to locate a cruise control device to set either one of the wind force, electric power, or wind and electric power for the vessel thrust by controlling rotation of the windmill, generator and motor in response to each datum of current position and set object position date, direction and velocity of the current time natural wind, direction and velocity of the ebb and flow, and to set the cruising course toward a target position at real time, so the automatic selection of cruising energy and course selection are conducted.

As the wind-driven vessel according to this embodiment has a generating raft utilizing a solar battery, not only wind energy but also solar energy are stored in a storage battery, which is convenient for cruising condition where the wind-driven cruise is not appropriate.

## Claims

1. A wind-driven vessel cruisable either by wind force, or by wind force and electric power, or by electric power, comprising a windmill mechanism (A) with a variable pitch propeller (11), a generator (26) rotatably driven by said windmill mechanism (A), a storage battery (27) for storing current generated by said generator (26), an electric motor (19) energizable by said storage battery (27), a screw (25) rotatably driven by at least one of said windmill mechanism (A) and said electric motor (19), a pitch control device (B) for controlling the propeller pitch, and a rotational plane control device (C) for controlling the direction of the rotational plane of the propeller (11) ;
**characterized in that** :
A/ said wind-driven vessel comprises :
a) measuring and processing means (D) for determining the natural wind direction with respect to the vessel, comprising :
- means (20) for measuring the cruising direction and speed of the vessel ;
- means (21) for measuring the synthetic wind from a synthesis of the natural wind and outlook wind generated as the vessel cruises ;
- means (22) for measuring the ebb and flow direction and speed ; and
- control means (18) for operating the direction of the natural wind from the values retrieved by the measuring means (20, 21, 22) ;
b) a steer angle control device (E) for adjusting the steer angle in response to the direction and velocity of the synthetic wind, said steer angle control device (E) comprising a steer driving means (23) controlled by the control means (18) based on the measured values of the synthetic wind and ebb and flow ; and
c) a cruising control device for controlling revolution of the propeller (11), generator (26) and motor (29) in response to each datum of the current position and set target position data, current direction and velocity of the natural wind, direction and velocity of the ebb and flow, so as to set thrust force of the vessel as either one of the wind force, wind force and electric power, and electric power, and to set a cruising course toward the target point in real time ;
B/ the windmill mechanism (A) comprises a horizontal shaft (12) supported by a vertical support (14) and a vertical shaft (13) rotatably connected to the horizontal shaft (12), the variable pitch propeller (11) being fixed on the horizontal shaft (12) and the vertical shaft (13) being rotatably connected to the screw (25) and generator (26) ; and
C/ the rotational plane control device (C) comprises a rotary device (15) provided on the vertical support (14) and rotatable by the electric motor (19), said rotational plane control device (C) being kept in a position so that the rotational plane of the propeller (11) receives the natural wind at its front through the control means (18) which controls the electric motor (19) based on the data from the measuring and processing means (D).

2. A vessel according to claim 1, **characterized in that** said vessel further comprises a raft with a solar battery thereon for charging the storage battery (27).

## Patentansprüche

1. Windangetriebenes Schiff zum Kreuzen entweder mit Windstärke oder mit Windstärke und elektrischer Leistung oder mit elektrischer Leistung mit einem Windradmechanismus (A), mit einem Stellpropeller (11)(Propeller mit änderbarem Anstellwinkel), mit einem vom Windradmechanismus (A) drehbar angetriebenen Generator (26), mit einer Speicherbatterie (27) zum Speichern des vom Generator (26) erzeugten Stroms, mit einem von der Speicherbatterie (27) antreibbaren Elektromotor (19), mit einer von wenigstens einem, dem Windradmechanismus (A) oder dem Elektromotor (19), drehbar angetriebenen Schraube (25), mit einer Steigungs- bzw. Anstellverstellvorrichtung (B) zur Steuerung der Steigung bzw. des Anstellwinkels des Propellers und mit einer Drehebenensteuervorrichtung (C) zum Steuern der Richtung der Drehebene des Propellers (11),
**dadurch gekennzeichnet,**
A/ **dass** das windangetriebene Schiff auch folgende Teile aufweist:
a) Mess- und Verarbeitungsmittel (D) zum Bestimmen der natürlichen Windrichtung in Bezug auf das Schiff mit:
- Mitteln (20) zum Messen der Fahrtrichtung und der Geschwindigkeit des Schiffs;
- Mitteln (21) zum Messen des künstlichen (scheinbaren) Windes aus einer Synthese natürlichen Windes und beim Kreuzen des Schiffes erzeugten Aussichtswindes;
- Mitteln (22) zum Messen der Richtung und Geschwindigkeit von Ebbe und Flut; sowie mit
- Steuermitteln (18) zum Handhaben der Richtung des natürlichen Windes anhand der von den Messmitteln (20, 21, 22) abgerufenen Werte;
b) eine Steuerwinkelsteuervorrichtung (E) zum Einstellen des Steuerwinkels entsprechend der Richtung und Geschwindigkeit des künstlichen Windes mit Steuerantriebsmitteln (23), die von den Steuermitteln (18) anhand der gemessenen Werte des künstlichen Windes und von Ebbe und Flut steuerbar sind, und
c) eine Fahrtsteuervorrichtung zum Steuern der Drehzahl des Propellers (11), des Generators (26) und des Motors (29) in Abhängigkeit von jeder Bezugsgröße der gegenwärtigen Position und der gesetzten Zielpositionsdaten, der gegenwärtigen Richtung und Geschwindigkeit des natürlichen Windes, der Richtung und Geschwindigkeit von Ebbe und Flut, zur Einstellung der Schubkraft des Schiffes eines aus Windstärke, Windstärke und elektrischer Leistung oder elektrischer Leistung und zur Bestimmung des Fahrtkurses zum Zielpunkt in Echtzeit;
B/ **dass** der Windradmechanismus (A) eine horizontale Welle (12), die durch eine vertikale Halterung (14) gehalten wird, und eine vertikale Welle (13), die drehbar mit der horizontalen Welle (12) verbunden ist, umfasst, wobei der Stellpropeller (11) auf der horizontalen Welle (12) befestigt ist und die vertikale Welle (13) mit der Schraube (25) und dem Generator (26) drehbar verbunden ist; und
C/ dass die Drehebenensteuervorrichtung (C) eine auf der vertikalen Halterung (14) angeordnete und vom Elektromotor (19) drehbare Drehvorrichtung (15) umfasst und derart in einer Position haltbar ist, dass die Drehebene des Propellers (11) den natürlichen Wind an seiner Vorderseite durch die Steuermittel (18) bekommt, welche den Elektromotor (19) basierend auf den Daten der Mess- und Verarbeitungsmittel (D) steuert.

2. Ein Schiff nach Anspruch 1, **dadurch gekennzeichnet, dass** das Schiff des Weiteren ein Floß mit einer darauf angeordneten Solarbatterie zum Aufladen der Speicherbatterie (27) umfasst.

## Revendications

1. Bateau propulsé par le vent pouvant naviguer grâce à la force du vent, grâce à la force du vent et à une énergie électrique, ou grâce à l'énergie électrique, comprenant un mécanisme d'éolienne (A) pourvu d'une hélice d'éolienne à pas variable (11), un générateur (26) entraîné en rotation par ledit mécanisme d'éolienne (A), une batterie d'accumulateurs (27) destinée à stocker un courant généré par ledit générateur (26), un moteur électrique (19) apte à être alimenté par ladite batterie d'accumulateurs (27), une hélice de bateau (25) entraînée en rotation par ledit mécanisme d'éolienne (A) et/ou ledit moteur électrique (19), un dispositif de réglage de pas (B) destiné à régler le pas de l'hélice d'éolienne, et un dispositif de réglage de plan de rotation (C) destiné à régler la direction du plan de rotation de l'hélice (11);
**caractérisé en ce que**:
A/ ledit bateau propulsé par le vent comprend également:
a) des moyens de mesure et de traitement (D) pour déterminer la direction du vent naturel par rapport au bateau et comprenant:
- un moyen (20) pour mesurer la direction de navigation et la vitesse du bateau;
- un moyen (21) pour mesurer le vent de synthèse résultant d'une synthèse du vent naturel et du vent apparent généré lorsque le bateau navigue;
- un moyen (22) pour mesurer la direction et la vitesse du flux et du reflux; et
- un moyen de commande (18) pour exploiter la direction du vent naturel à partir des valeurs obtenues par les moyens de mesure (20, 21, 22);
b) un dispositif de réglage d'angle de gouvernail (E) destiné à ajuster l'angle de gouvernail en fonction de la direction et de la vitesse du vent de synthèse, ledit dispositif de réglage d'angle de gouvernail (E) comprenant un moyen d'entraînement de gouvernail (23) commandé par les moyens de commande (18) à partir des valeurs mesurées du vent de synthèse et du flux et du reflux; et
c) un dispositif de commande de navigation destiné à commander la rotation de l'hélice (11), du générateur (26) et du moteur (29) en fonction de chacune des données de la position actuelle et de données de position cible fixée, de la direction et de la vitesse actuelles du vent naturel, de la direction et de la vitesse du flux et du reflux, afin de définir comme force de poussée du bateau la force du vent, la force du vent et l'énergie électrique ou l'énergie électrique, et de définir en temps réel une route de navigation en direction du point cible;
B/ le mécanisme d'éolienne (A) comprend un arbre horizontal (12) supporté par un support vertical (14), et un arbre vertical (13) relié de manière rotative à l'arbre horizontal (12), l'hélice à pas variable (11) étant montée sur l'arbre horizontal (12), et l'arbre vertical (13) étant relié de manière rotative à l'hélice (25) du bateau et au générateur (26); et
C/ le dispositif de réglage de plan de rotation (C) comprend un dispositif rotatif (15) monté sur le support vertical (14) et apte à être entraîné en rotation par le moteur électrique (19), ledit dispositif de réglage de plan de rotation (C) étant maintenu dans une position telle que le plan de rotation de l'hélice (11) reçoit le vent naturel de manière frontale par l'intermédiaire du moyen de commande (18) qui commande le moteur électrique (19) à partir des données provenant des moyens de mesure et de traitement (D).

2. Bateau selon la revendication 1, **caractérisé en ce qu'**il comprend également un radeau sur lequel est installée une batterie solaire destinée à charger la batterie d'accumulateurs (27).
